# EUROPEAN PATENT APPLICATION

(11) **EP 4 775 343 A1**
(43) Date of publication of application: **15.07.2026**
(21) Application number: 25867172.6
(22) Date of filing: 18.09.2025
(51) Int. Cl.: B23K 20/10, B21J 15/02, H01M 10/04, H01M 50/566

(54) **ULTRASONIC WELDING APPARATUS, ULTRASONIC WELDING METHOD, BATTERY CELL MANUFACTURED BY ULTRASONIC WELDING METHOD, BATTERY PACK AND VEHICLE INCLUDING SAME**

(30) Priority: 11.11.2024 KR 20240158970
(71) Applicant: LG ENERGY SOLUTION, LTD., Seoul 07335 (KR)
(72) Inventor: JEONG, Minjae, Daejeon 34122 (KR); SHIN, Hangsoo, Daejeon 34122 (KR); PARK, Jimin, Daejeon 34122 (KR)
(74) Representative: Goddar, Heinz J.
(86) International application number: PCT/KR2025/014498
(87) International publication number: WO 2026/100979

(57) **Abstract**

An object of the present disclosure is to provide an Ultrasonic welding apparatus, ultrasonic welding method, a battery cell manufactured thereby, a battery pack, and an automobile including the same, which are capable of ensuring sufficient welding strength between a current collector plate and a terminal (rivet) of the battery cell. An ultrasonic welding device according to an embodiment of the present disclosure includes a welding horn having a plurality of protrusions at the end of a welding tip to press at least one member to be welded among a current collector plate and a rivet into a contact surface having a protruding shape. A plurality of protrusions are formed by protruding from the end face in a direction toward the member to be welded. Among the plurality of protrusions, the first protrusions arranged in the central area of the knurled portion are formed in a hexagonal cross-sectional shape, and the first protrusions have a transverse cross-sectional area that decreases as they move toward the member to be welded.

## Description

### [TECHNICAL FIELD]

The present disclosure relates to an ultrasonic welding apparatus and an ultrasonic welding method, a battery cell manufactured thereby, a battery pack, and a vehicle comprising the battery pack.

### [BACKGROUND ART]

Secondary batteries are attracting significant attention as an energy source for improving environmental sustainability and energy efficiency, owing not only to their high energy density and their remarkable potential to reduce fossil fuel consumption, but also to the advantage of producing no byproducts during energy utilization. Unlike non-rechargeable primary batteries, secondary batteries are batteries that can be charged and discharged. They are applied not only in portable electronic devices but also in vehicles driven by an electric drive source, such as electric vehicles (EVs) and hybrid electric vehicles (HEVs)

When a high output voltage is required, a plurality of unit secondary battery cells, i.e., battery cells, are connected in series to configure a battery pack. In addition, depending on the required charge/discharge capacity of the battery pack, a plurality of battery cells may be electrically connected in parallel to form the battery pack. The number of battery cells included in the battery pack may be variously set depending on the required output voltage and/or charge/discharge capacity.

"Lithium secondary batteries are categorized into prismatic and cylindrical secondary batteries (battery cells), wherein the electrode assembly is accommodated within a metal can (battery housing), and pouch-type secondary batteries, wherein the electrode assembly is sealed within a pouch case composed of an aluminum laminate sheet. In the case of a cylindrical battery, a terminal (rivet) provided on the closed side of the battery housing (battery can) penetrates the closed side and comes into contact with a current collector plate arranged on the inside of the battery can. The collector plate and terminals can be connected by ultrasonic welding. When ultrasonic welding is performed by bringing the welding horn into contact with the current collector plate on the inside of the battery can, the contact area between the current collector plate and the terminal can be welded.

The ultrasonic welding device has an anvil on which the terminal is seated and a horn that pressurizes the current collector plate. The horn of the ultrasonic welding device may have a structure having a plurality of protrusions to increase friction and pressure with the workpiece. In order to increase energy capacity, the core around which the electrode assembly of a cylindrical battery cell is wound needs to be reduced, and in this case, the diameter of the ultrasonic welding horn inserted into the core of the electrode assembly also needs to be reduced. However, as the horn diameter of the welding device is reduced, a problem of reduced weld joint strength may occur due to a decrease in the welding area.

Another issue that arises during ultrasonic welding of the current collector plate and the terminal is that it is difficult to form a complete knurl pattern at the outermost welded joint between the current collector plate and the terminal. As a result, a uniform knurl pattern cannot be produced along the outer edge of the welded joint, thereby reducing the overall knurl area. Consequently, excessive stress is concentrated on the irregular knurl pattern formed at the outer edge, increasing plastic deformation and potentially generating foreign matter or burrs. Accordingly, a new knurl pattern is required to secure sufficient weld strength within a limited horn diameter. The background technology described above is intended to explain the background from which the present disclosure was derived, and does not mean that it was a technology known prior to the filing of the present disclosure.

### [SUMMARY OF THE INVENTION]

### [TECHNICAL PROBLEM]

An object of the present disclosure is to provide an ultrasonic welding device, an ultrasonic welding method, a battery cell produced thereby, a battery pack, and an automobile including the same, capable of ensuring enhanced welding strength between the current collector plate and the terminal (rivet) of the battery cell.

In addition, an object of the present disclosure is to prevent excessive stress from being concentrated at the outermost part of the welded portion of the current collector plate and terminal of a battery cell, thereby preventing plastic deformation from increasing, and to reduce foreign matter or burrs.

The technical problems to be solved by the present disclosure are not confined to the foregoing description, and additional problems apparent to those skilled in the art will become evident from the following detailed description.

### [SOLUTION TO THE PROBLEM]

An ultrasonic welding device according to an embodiment of the present disclosure includes a welding tip for joining a current collector plate of a cylindrical battery cell to a rivet by ultrasonic welding. The welding tip comprises a welding horn provided at its end to press at least one workpiece, selected from the current collector plate and the rivet, through a contact surface having an uneven configuration. The welding tip includes a welding horn at the end of the welding tip to press at least one workpiece, selected from the current collector plate and the rivet, with a contact surface having an uneven shape. A plurality of protrusions in the knurling section are formed so as to project from the end surface in a direction toward the workpiece. Among the plurality of protrusions, the first protrusions arranged in the central region of the knurling section are formed in a hexagonal cross-sectional shape. The transverse cross-sectional area of the first protrusions gradually decreases in a direction toward the workpiece.

The first protrusions may be formed such that a first cross-sectional shape at the end point and a second cross-sectional shape at the protrusion start point are each hexagonal in cross-section in the direction toward the workpiece, and the first and second cross-sectional shapes may be arranged coaxially

The above first protrusions can be arranged in a honeycomb structure.

The plurality of protrusions may further include second protrusions disposed in an outer region surrounding a central region of the knurling section.

The above second protrusions may be formed in a different shape from the above first protrusions.

The above second protrusions may be formed in a truncated conical shape.

The outermost projections among the above first projections may be arranged spaced apart from each other. The above second protrusions can be arranged between the above outer protrusions.

The second protrusions may be disposed at positions corresponding to the corner points of the hexagon.

An ultrasonic welding method according to an embodiment of the present disclosure comprises the steps of: preparing an ultrasonic welding device having a welding tip, wherein the welding tip includes a welding horn at an end of the welding tip so as to press at least one workpiece among a current collector plate and a rivet of a cylindrical battery cell with a contact surface having an uneven shape; and joining the current collector plate of the cylindrical battery cell to the rivet by ultrasonically welding using the ultrasonic welding device.

The step of joining by ultrasonic welding includes pressing a welding horn having a knurling section against the workpiece, wherein the knurling section comprises a plurality of protrusions provided on an end surface of the welding tip, the protrusions being configured to project from the end surface toward the workpiece and define a contact surface having an uneven configuration.

Among the plurality of protrusions joined to the workpiece, the first protrusions arranged in the central region of the knurling section are formed in a hexagonal cross-sectional shape and are pressed against the workpiece, and the first protrusions have a transverse cross-sectional area that decreases in the direction toward the workpiece.

In the step of joining by ultrasonic welding, the first protrusions may be arranged in a honeycomb structure and pressed against the workpiece.

In the step of joining by ultrasonic welding, among the plurality of protrusions, the second protrusions disposed in an outer region surrounding the central region of the knurling section are formed in a truncated conical shape and may be pressed into an outer region of the welded portion of the workpiece.

In the step of joining by ultrasonic welding, the outermost projections among the first projections are arranged spaced apart from each other and pressed into an edge region of the center region of the welded portion of the workpiece; the second projections, which are arranged at positions corresponding to the corner points of the hexagon, are arranged between the outer projections and can be pressed into an outer region of the welded portion of the workpiece.

A cylindrical battery cell according to an embodiment of the present disclosure comprises: a cylindrical battery housing; a cylindrical electrode assembly accommodated within the battery housing, the electrode assembly being formed by winding a first electrode, a second electrode, and a separator around a winding axis; a current collector plate disposed in the battery housing and electrically connected to at least one of the first electrode and the second electrode; and a rivet, at least a portion of which is inserted through an opening of the battery housing and joined to the current collector plate.

The above current collector plate and the above rivet are joined by ultrasonic welding, and a plurality of indentations are formed by ultrasonic welding at the welded portion of the above current collector plate and the above rivet. The plurality of indentations are formed by pressing a contact surface having an uneven configuration of a welding horn provided at an end of a welding tip of an ultrasonic welding device onto at least one workpiece selected from the current collector plate and the rivet. The plurality of indentations are formed in a hexagonal cross-sectional shape corresponding to the plurality of projections of the knurling section arranged on the end surface of the welding tip. The plurality of indentations are formed so as to project from the end surface in a direction toward the workpiece.

Among the plurality of indentations, the first indentations formed in the central region of the welded portion may include first indentation grooves formed by being indented into the workpiece. The first indentation grooves may be formed in a truncated hexagonal pyramidal shape, the cross-sectional area of which decreases with increasing depth from the surface of the workpiece.

The plurality of indentations may include second indentation grooves arranged in an outer region surrounding the central region of the weld. The second indentation grooves may be formed in a truncated cone shape whose cross-sectional area decreases as the depth increases from the surface of the workpiece.

According to an embodiment of the present disclosure, there is provided a battery pack comprising at least one cylindrical battery cell.

According to an embodiment of the present disclosure, a vehicle including at least one battery pack is provided.

### [ADVANTAGEOUS EFFECTS OF THE INVENTION]

According to an embodiment of the present disclosure, there are provided an ultrasonic welding device capable of ensuring welding strength between a current collector plate and a terminal (rivet) of a battery cell, an ultrasonic welding method, a battery cell produced thereby, a battery pack, and an automobile.

In addition, according to an embodiment of the present disclosure, excessive stress is concentrated at the outermost part of the welded portion of the current collector plate and terminal of the battery cell, which prevents plastic deformation from increasing, and foreign matter or burrs can be reduced.

However, the advantageous effects of the present disclosure are not limited to those described above, and other technical effects not expressly mentioned will be readily understood by those skilled in the art from the following description.

### [BRIEF DESCRIPTION OF DRAWINGS]

FIG. 1 is a perspective view of a battery cell according to an embodiment of the present disclosure.
FIG. 2 is a longitudinal cross-sectional perspective view of the battery cell according to the embodiment of FIG. 1.
FIG. 3 is a longitudinal cross-sectional view of the battery cell according to the embodiment of FIG. 1.
FIG. 4 is a cross-sectional view showing a process of ultrasonic welding a current collector plate and a rivet of a battery cell according to an embodiment of the present disclosure.
FIG. 5 is a cross-sectional view showing a welding horn of a welding tip constituting an ultrasonic welding device according to an embodiment of the present disclosure.
FIG. 6 is a plan view showing a welding horn constituting an ultrasonic welding device according to an embodiment of the present disclosure.
FIG. 7 is a plan view showing an enlarged view of a protrusion of a welding horn constituting an ultrasonic welding device according to an embodiment of the present disclosure.
FIG. 8 is a side view showing an enlarged view of a protrusion of a welding horn constituting an ultrasonic welding device according to an embodiment of the present disclosure.
FIG. 9 is a cross-sectional view showing a welding horn of a welding tip constituting an ultrasonic welding device according to another embodiment of the present disclosure.
FIG. 10 is a plan view showing a welding horn constituting an ultrasonic welding device according to the embodiment of FIG. 9.
FIG. 11 is a side view showing an enlarged view of a second protrusion of a welding horn constituting an ultrasonic welding device according to the embodiment of FIG. 9.
FIG. 12 is a view illustrating a battery pack including the battery cell according to an embodiment of the present disclosure.
FIG. 13 is a diagram for explaining a vehicle comprising at least one battery pack of FIG. 12.

### [MODES FOR CARRYING OUT THE INVENTION]

The advantages and features of the present disclosure, and methods for achieving the same, will become apparent from the following detailed description of embodiments taken in conjunction with the accompanying drawings. However, the present disclosure is not limited to the embodiments disclosed below, but may be implemented in various other forms. The embodiments are provided merely to ensure a complete disclosure of the present disclosure and to fully inform those skilled in the art of the scope of the invention. The present disclosure is defined only by the scope of the appended claims. Therefore, in some embodiments, well-known process steps, well-known device structures, and well-known technologies are not described in detail so as not to obscure the present disclosure. Throughout the specification, the same reference numerals refer to the same elements.

In the drawings, the thicknesses of layers and regions may be exaggerated for clarity. Throughout the specification, similar parts are designated by the same reference numerals. When an element such as a layer, film, region, or plate is referred to as being "on" another element, it can be directly on the other element or intervening elements may be present. Conversely, when a part is referred to as being "directly on" another part, it is to be understood that there are no intervening parts. Also, when an element is referred to as being "under" another element, it may be disposed directly beneath the other element or with one or more intervening elements therebetween. Conversely, when a part is referred to as being "directly under" another part, it is to be understood that there are no intervening parts.

Hereinafter, an ultrasonic welding device according to an embodiment of the present disclosure and a cylindrical battery cell manufactured thereby will be described, followed by a detailed description of the ultrasonic welding method according to an embodiment of the present disclosure. An ultrasonic welding device and an ultrasonic welding method according to one embodiment of the present disclosure apply a knurling section having hexagonal cross-sectional projections arranged on a welding horn of a welding tip used when ultrasonically welding a current collector plate of a cylindrical battery cell to a rivet, thereby increasing a pressurized area for a workpiece (current collector plate, rivet) and ensuring sufficient weld joint strength. An ultrasonic welding device and an ultrasonic welding method according to another embodiment of the present disclosure employ a knurling section in which protrusions having a hexagonal cross-sectional shape are disposed in a central region of a welding tip and protrusions having a circular cross-sectional shape are disposed in an outer region, thereby preventing excessive stress concentration at the outermost part of a welding portion between a current collector plate and a terminal of a battery cell, reducing plastic deformation, and minimizing the generation of foreign matter or burrs.

A cylindrical battery cell according to an embodiment of the present disclosure is provided in a structure in which an electrode assembly is inserted into a cylindrical battery housing. For convenience of explanation, the direction corresponding to the longitudinal direction of the winding axis of the electrode assembly wound in a jelly-roll form is referred to as the 'axial direction', 'upper-lower direction', or 'height direction' in this specification. And the direction surrounding the winding axis is referred to as the 'circumferential direction' or 'peripheral direction'. The direction toward or away from the winding axis is referred to as the 'radial direction. The direction approaching the winding axis in the radial direction can be referred to as the 'centripetal direction', and the direction away from the winding axis can be referred to as the 'centrifugal direction'.

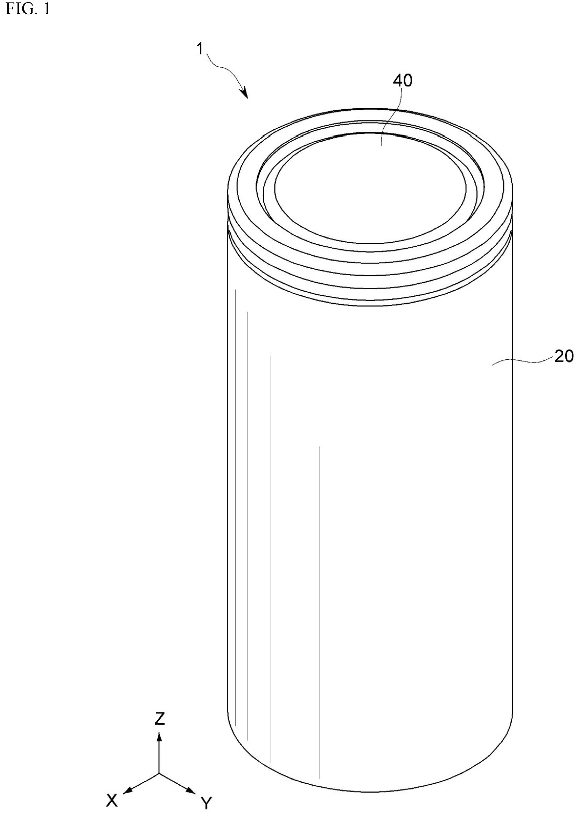

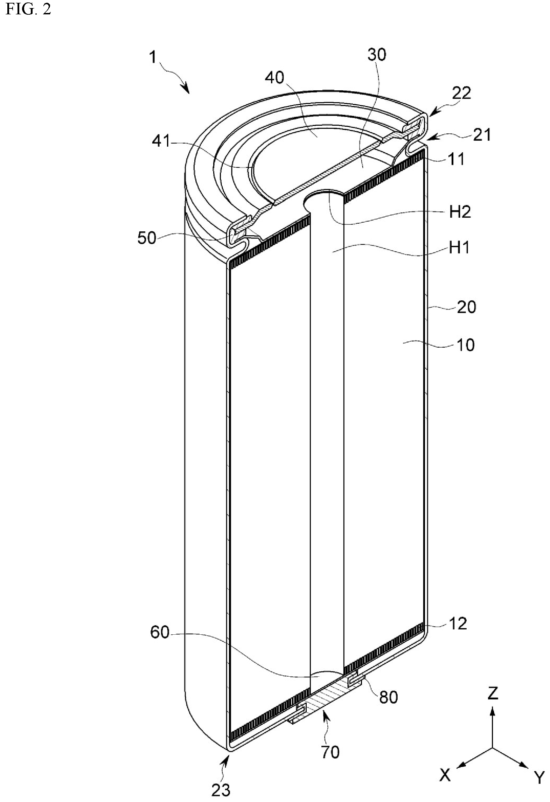

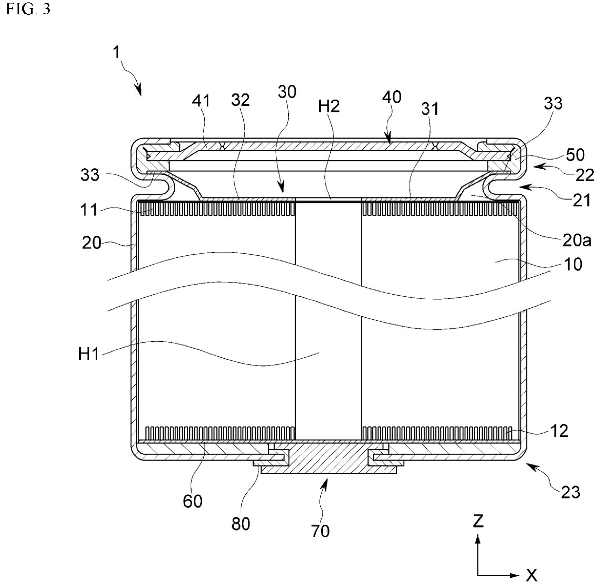

FIG. 1 is a perspective view of a battery cell according to an embodiment of the present disclosure. FIG. 2 is a longitudinal cross-sectional perspective view of the battery cell according to the embodiment of FIG. 1. FIG. 3 is a longitudinal cross-sectional view of the battery cell according to the embodiment of FIG. 1. Referring to FIGS. 1 to 3, a battery cell 1 according to one embodiment of the present disclosure includes an electrode assembly 10, a battery housing 20, a current collector 30, a battery cap 40, a sealing gasket 50, a current collector plate 60, and a rivet 70. The battery cell of the present disclosure is not limited to the shapes illustrated in FIGS. 1 to 3 and may also be applied to battery cells of other configurations. To avoid obscuring the gist of the invention, components for electrical connection-such as bus bars, cooling units, and power terminals-are omitted from the drawings.

A battery cell 1 according to one embodiment of the present disclosure may be a cylindrical secondary battery (cylindrical battery cell). The electrode assembly 10 may be formed in a cylindrical shape having a core and an outer circumferential surface by winding a first electrode (e.g., a negative electrode), a second electrode (e.g., a positive electrode), and a separator interposed therebetween around a winding axis. The electrode assembly 10 may be of a jelly-roll type. An additional separator may be provided on the outer circumferential surface of the electrode assembly 10 for insulation from the battery housing 20. The electrode assembly 10 may have a winding structure well known in the art without limitation.

The first electrode comprises a first electrode current collector and a first electrode active material coated on one or both surfaces of the first electrode current collector. At one end (upper end) in the width direction of the first electrode (parallel to the height direction of the battery cell shown in FIG. 1), there is an uncoated portion where the first electrode active material is not applied. That is, along the winding direction, the first electrode includes an uncoated portion exposed outside the separator at one longitudinal end where no active material is coated. The uncoated portion functioning as the first electrode tab is referred to as a first uncoated portion 11. The first uncoated portion 11 is provided at the upper side with respect to the height direction of the electrode assembly 10 accommodated in the battery housing 20. At least a part of the first uncoated portion 11 itself is used as an electrode tab. The first uncoated portion 11 may be, for example, a negative-electrode tab.

The second electrode comprises a second electrode current collector and a second electrode active material layer coated on one or both surfaces of the current collector. Based on the width (height) direction of the second electrode, there is an uncoated portion at the opposite end where the second electrode active material is not applied. That is, in the winding direction, the second electrode includes an uncoated portion exposed outside the separator at the opposite longitudinal end where no active material layer is formed. The uncoated portion functioning as the second electrode tab is referred to as a second uncoated portion 12. The second uncoated portion 12 is provided at the lower side with respect to the height direction of the electrode assembly 10 accommodated in the battery housing 20. The second uncoated portion 12 may be, for example, a positive-electrode tab. The second non-conductive part 12 may be, for example, a positive electrode tab.

The battery housing 20 is a generally cylindrical receptacle having an opening formed on one side and may be made of a conductive metal. The battery housing 20 is configured to receive and accommodate the electrode assembly 10 of the secondary battery. A side surface of the battery housing 20 and a bottom surface located opposite the opening 20a may be formed integrally. In the height direction, the upper side of the battery housing 20 may be open and the lower side closed. The bottom surface of the battery housing 20 may be formed to have a substantially flat shape. The battery housing 20 is configured to receive the electrode assembly 10 and an electrolyte through an opening 20a formed at its top.

The battery housing 20 may include a beading portion 21 formed in an end region adjacent to the opening 20a at its top, and a crimping portion 22 formed on the beading portion 21. The beading portion 21 has a recessed shape formed by pressing an outer circumferential portion of the battery housing 20 inward to a predetermined depth. The beading portion 21 may be pressed inward in an area between the opening 20a of the battery housing 20 and an internal receiving space that accommodates the electrode assembly 10.

The beading portion 21 provides a support surface on which the sealing gasket 50 and the battery cap 40 can be seated. Additionally, the beading portion 21 may provide a support surface on which at least a portion of the periphery of the current collector 30 can be seated and coupled. At least a portion of the edge of the current collector 30, at least a portion of the edge of the sealing gasket 50, and at least a portion of the edge of the battery cap 40 may be seated on an upper surface of the beading portion 21. The beading portion 21 may be formed by pressing the outer circumferential surface of the battery housing 20 inward in a region adjacent to the opening 20a of the battery housing 20, with the electrode assembly 10 accommodated within the battery housing 20 after being inserted through the opening 20a.

To stably support the current collector 30, the battery cap 40, and the sealing gasket 50, an upper surface of the beading portion 21 may extend in a direction substantially parallel to the bottom surface of the battery housing 20, that is, substantially perpendicular to a side wall of the battery housing 20. The beading portion 21 prevents the electrode assembly 10, whose size corresponds to the inner diameter of the internal receiving space of the battery housing 20, from coming out through the opening 20a at the top of the battery housing 20, and functions as a support on which the battery cap 40 and the like are seated.

The crimping portion 22 extends upward from the beading portion 21 and is formed above the beading portion 21. The crimping portion 22 has a bent shape that extends to surround an edge portion and at least part of an upper surface of the battery cap 40 disposed on the beading portion 21. By the crimping portion 22, the battery cap 40 is fixed on the beading portion 21. The crimping portion 22 may extend inward in the radial (centripetal) direction of the battery cell 1 from the upper circumference of the battery housing 20. The crimping portion 22 is provided in a region corresponding to the edge of the upper surface of the battery cap 40, where it fixes the battery cap 40 and prevents the battery cap 40 from detaching upward.

An upper end of the crimping portion 22 extends inward by a predetermined distance along the radial direction of the battery cell 1 and is bent to wrap a portion of the upper surface of the battery cap 40, thereby fixing the perimeter of the upper surface of the battery cap 40. An edge-region of the battery cap 40 is interposed between the upper end of the crimping portion 22 and the beading portion 21, is fixed to the battery housing 20, and covers the opening 20a of the battery housing 20.

The current collector 30 is accommodated inside the battery housing 20. The current collector 30 is made of a conductive metal material and can be electrically connected to the electrode assembly 10. The current collector 30 can be electrically connected to the battery housing 20. That is, the current collector 30 may electrically connect the first electrode of the electrode assembly 10 to the battery housing 20. The current collector 30 may include a support portion 31, a tab-joining portion 32, and a housing-joining portion 33.

The support portion 31 and the tab-joining portion 32 of the current collector 30 are disposed above the electrode assembly 10. The support portion 31 is disposed on one side of the electrode assembly 10. The tab-joining portion 32 extends from the support portion 31 and is joined to a first uncoated portion 11 of the electrode assembly 10. For example, while being seated on the first uncoated portion 11 of the electrode assembly 10, the tab-joining portion 32 may be joined to the electrode assembly 10 by welding over a certain area. The tab-joining portion 32 of the current collector 30 may be located below the lower surface of the beading portion 21.

A through-hole (not shown) may be formed in the current collector 30 to allow flames generated inside the battery cell 1 to be smoothly discharged. Accordingly, even if thermal runaway occurs on the side of the electrode assembly 10, flames and venting gas generated from the electrode assembly 10 can be discharged smoothly through the through-hole without being blocked by the current collector 30 located above the electrode assembly 10. Thus, it is possible to prevent flames from propagating toward the beading portion 21 located near the electrode assembly 10 and the current collector 30, thereby preventing pinholes from being formed in the beading portion 21 and inhibiting the spread of fire to other battery cells 1 adjacent to the battery cell 1 in which the fire occurred.

The support portion 31 may have a current-collector hole H2 formed at a position corresponding to a winding hole H1 formed approximately at the center of the electrode assembly 10. The winding hole H1 and the current-collector hole H2, which communicate with each other, can serve as a passage for inserting a welding rod (welding tip) for welding between an electrode terminal of the electrode assembly 10 and the current collector 30, or between the electrode terminal and a lead tab (not shown).

If the diameter of the current collector hole H2 is excessively smaller than that of the winding hole H1, the opening of the winding hole H1 may become covered, thereby deteriorating electrolyte filling characteristics and failing to secure sufficient space for insertion of a welding device or for laser irradiation. Accordingly, so that the current-collector hole H2 does not cover the winding hole H1 formed in the core of the electrode assembly 10, the winding hole H1 of the electrode assembly 10 may have a diameter substantially the same as or larger than that of the current-collector hole H2.

The housing-joining portion 33 extends from the support portion 31 toward a peripheral region and is joined to an inner wall surface of the battery housing 20. The housing-joining portion 33 may extend from the support portion 31 and be electrically joined to the inner surface of the battery housing 20. For example, the housing-joining portion 33 may be joined to the upper surface of the beading portion 21, which is part of the inner surface of the battery housing 20.

An inner diameter of the battery housing 20 in a region where the beading portion 21 is formed is smaller than that of the electrode assembly 10. For stable contact and coupling, the beading portion 21 may have a shape extending in a direction substantially parallel to the bottom surface of the battery housing 20, i.e., substantially perpendicular to the side wall of the battery housing 20. The housing-joining portion 33 may be welded to the upper surface of the beading portion 21. Welding for joining the battery housing 20 and the current collector 30 may be performed by, for example, laser welding, ultrasonic welding, or spot welding.

The battery cap 40 is provided to cover the opening 20a of the battery housing 20. The battery cap 40 may be joined to the battery housing 20 to seal the opening 20a of the battery housing 20 through a crimping process using the sealing gasket 50. The battery cap 40 may include a venting portion 41 configured to prevent an increase in internal pressure caused by gas generated inside the battery housing 20.

The venting portion 41 may be configured to rupture when the internal pressure of the battery housing 20 increases above a predetermined level. The venting portion 41 is formed in a part of the battery cap 40 and may be structurally weaker than surrounding regions so as to readily rupture when internal pressure, for example due to thermal runaway, is applied. For example, the venting portion 41 may be an area having a smaller thickness than surrounding regions. The venting portion 41 may be formed as a substantially circular closed loop.

The battery cap 40 covers the opening 20 formed on one side of the battery housing 20a. The battery cap 40 may be fixed by the crimping portion 22 formed at the top of the battery housing 20. To improve fixing force and sealing of the battery housing 20, a sealing gasket 50 is interposed between the battery housing 20 and the battery cap 40, and between the current collector 30 and the battery cap 40. Accordingly, the current collector 30 may be interposed between the beading portion 21 of the battery housing 20 and the sealing gasket 50 so as to be positioned therebetween. The current collector 30 interposed between the beading portion 21 and the sealing gasket 50 may be fixed by bending of the crimping portion 22 extending upward from the beading portion 21.

The sealing gasket 50 is provided to surround the battery cap 40 and to hermetically seal a space between the battery cap 40 and the battery housing 20. The sealing gasket 50 serves to maintain airtightness between the battery housing 20 and the battery cap 40. By ensuring excellent sealing performance, the sealing gasket 50 can prevent moisture from penetrating into the battery housing 20 and can also prevent an electrolyte or gas within the battery housing 20 from leaking to the outside through a gap between the battery housing 20 and the battery cap 40.

The current collector plate 60 is accommodated inside the battery housing 20. The current collector plate 60 is made of a conductive metal and can be electrically connected to the electrode assembly 10. The current collector plate 60 can be electrically connected to the second electrode of the electrode assembly 10. The current collector plate 60 is disposed above the electrode assembly 10. The current collector plate 60 is disposed on a lower surface of the electrode assembly 10 and is joined to a second uncoated portion 12 of the electrode assembly 10. While being seated on the second uncoated portion 12 of the electrode assembly 10, the current collector plate 60 may be joined to the electrode assembly 10 by welding over a certain area. Welding for joining the battery housing 20 and the current collector plate 30 may be performed by, for example, laser welding, ultrasonic welding, or spot welding.

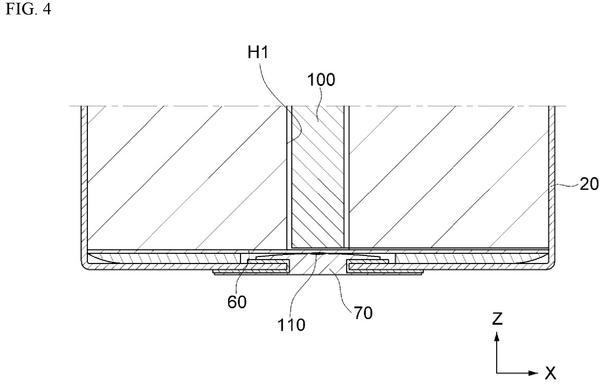

The rivet 70 is inserted into an opening formed in a bottom portion of the battery housing 20 and is joined thereto. An insulating member 80 may be interposed between the rivet 70 and the opening of the battery housing 20. The insulating member 80 can electrically insulate the rivet 70 from the battery housing 20. FIG. 4 is a cross-sectional view showing a process of ultrasonic welding a current collector plate and a rivet of a battery cell according to an embodiment of the present disclosure. The current collector plate 60 and the rivet 70 of the battery cell can be welded together by an ultrasonic welding device. The ultrasonic welding device may include a welding tip 100. The welding tip 100 may be inserted into the winding hole H1 to ultrasonically weld and join the current collector plate 60 and the rivet 70, which are workpieces. A weld 110 is formed by the welding tip 100, and the current collector plate 60 and the rivet 70 can be joined by the weld 110.

The rivet 70 may include a rivet body having a substantially cylindrical shape, and upper and lower protrusions respectively extending and projecting in a radial direction parallel to the horizontal direction from upper and lower surfaces of the rivet body, so that the rivet body can be positioned within an opening formed in a bottom portion of the battery housing 20. The rivet body of the rivet 70 may be located within an opening formed in the bottom center portion of the battery housing 20. For this purpose, the outer diameter of the rivet body may be formed to be smaller than the diameter of an opening formed in a bottom portion of the battery housing 20.

The upper protrusion of the rivet 70 can be inserted through an opening formed in the lower surface of the battery housing 20 and interposed between the battery housing 20 and the current collector plate 60. The outer diameter of the upper protrusion can be formed to be larger than the diameter of the opening formed in the lower surface of the battery housing 20. The lower protrusion of the rivet 70 is located on the outer side of the bottom surface of the battery housing 20. The outer diameter of the lower protrusion may be formed to be larger than the diameter of an opening formed in a bottom portion of the battery housing 20. In order to allow the rivet 70 to be smoothly inserted through the opening of the battery housing 20 and to allow the rivet 70 to be stably coupled through the opening of the battery housing 20, the outer diameter of the lower protrusion may be formed larger than the outer diameter of the upper protrusion.

The insulating portion 80 may have a shape corresponding to the rivet 70. Accordingly, the insulating portion 80 may include a cylindrical insulating body, an upper insulating protrusion having a disk-ring shape, and a lower insulating protrusion. The upper and lower heights of the insulating portion 80 can be formed to be the same as the distance between the bottom surface of the upper protrusion of the rivet 70 and the upper surface of the lower protrusion. The inner diameter of the insulating body of the insulating portion 80 may be formed to be equal to the diameter of an opening formed in a bottom portion of the battery housing 20, and the outer diameter may be formed to be equal to the outer diameter of a rivet body of the rivet 70.

The upper insulating protrusion of the insulating portion 80 can be formed by protruding and extending in a radial direction parallel to the horizontal direction from the upper surface of the insulating body of the insulating portion 80. The upper insulating protrusion is inserted through an opening formed in the lower surface of the battery housing 20 and is interposed between the lower surface of the battery housing 20 and the upper protrusion of the rivet 70. The outer diameter of the upper insulating protrusion may be formed to be larger than the diameter of an opening formed in a bottom portion of the battery housing 20.

The lower insulating protrusion of the insulating portion 80 can be formed by protruding and extending in a radial direction parallel to the horizontal direction from the lower surface (bottom) of the insulating body. The lower insulating protrusion is located on the outer side of the bottom surface of the battery housing 20. The outer diameter of the lower insulating protrusion can be formed to be larger than the diameter of the opening formed in the bottom surface of the battery housing 20. In order for the insulating portion 80 to be smoothly inserted through and stably coupled to the opening of the battery housing 20, the outer diameter of the lower insulating protrusion may be formed to be larger than the outer diameter of the upper insulating protrusion. In order to secure the insulation performance of the insulating portion 80, the outer diameter of the upper insulating protrusion may be formed to be larger than the outer diameter of the upper protrusion of the rivet 70, and the outer diameter of the lower insulating protrusion may be formed to be larger than the outer diameter of the lower protrusion of the rivet 70.

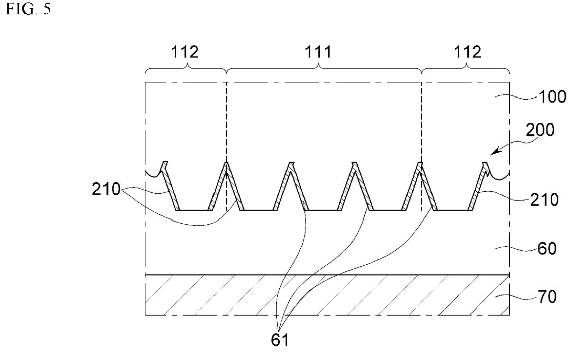

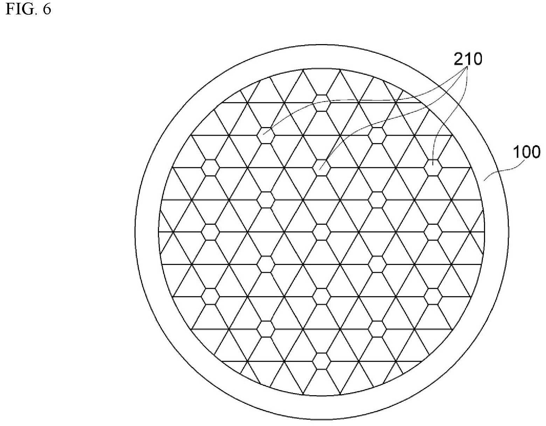

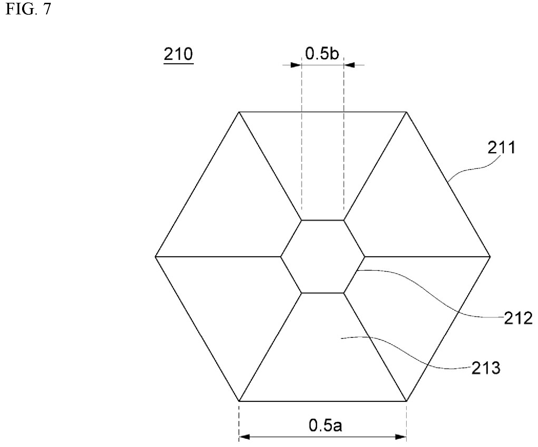

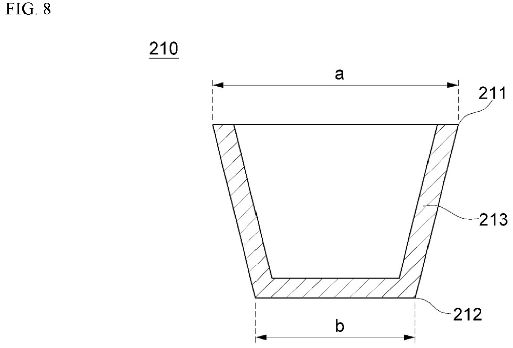

Next, an ultrasonic welding device for ultrasonically welding a rivet 70 to a current collector plate 60 of the above-described battery cell is described. FIG. 5 is a cross-sectional view showing a welding horn of a welding tip constituting an ultrasonic welding device according to an embodiment of the present disclosure. FIG. 6 is a plan view showing a welding horn constituting an ultrasonic welding device according to an embodiment of the present disclosure. FIG. 7 is a plan view showing an enlarged view of a protrusion of a welding horn constituting an ultrasonic welding device according to an embodiment of the present disclosure. FIG. 8 is a side view showing an enlarged view of a protrusion of a welding horn constituting an ultrasonic welding device according to an embodiment of the present disclosure.

Referring to FIGS. 5 to 8, the welding tip 100 includes a welding horn 200 provided at an end of the welding tip 100 and having a plurality of protrusions 210 configured to press at least one workpiece selected from the current collector plate 60 and the rivet 70 into contact with a contact surface having an uneven configuration. The welding horn 200 includes a knurling section including a plurality of protrusions 210 arranged on the end surface of the welding tip 100 to press the workpiece with a contact surface having an uneven shape.

A plurality of protrusions 210 constituting the knurling section are formed to protrude from the end surface of the welding tip 100 in a direction toward the workpiece. The plurality of protrusions 210 may include first protrusions 210 arranged in the central region of the knurling section. The first protrusions 210 may be formed in a hexagonal cross-sectional shape and may be formed so that the transverse cross-sectional area decreases in the direction toward the workpiece.

The first protrusions 210 may be formed such that a first cross-sectional shape at an end point 212 and a second cross-sectional shape at a protrusion start point 211 each have a hexagonal cross-sectional shape, based on a direction toward the workpiece. The first cross-sectional shape at the end point 212 of the first protrusions 210 and the second cross-sectional shape at the protrusion start point 211 can be formed to be arranged coaxially. That is, the first protrusions 210 may have a truncated conical shape. The first protrusions 210 can be arranged in a hexagonal honeycomb structure.

The first protrusion 210 may have six trapezoidal side portions 213 between a hexagonal protrusion starting point 211 and a hexagonal end point 212. The six side portions 213 of the first protrusion 210, together with the hexagonal end point 212, press the current collector plate 60, which is a workpiece, toward the rivet 70, thereby enabling the current collector plate 60 and the rivet 70 to be ultrasonically welded with a large pressing area.

According to an embodiment of the present disclosure, by welding the current collector plate 60 and the rivet 70 of the battery cell using a welding horn having a knurl pattern with a hexagonal cross-section, the surface area in contact with the base material can be increased and a sufficient welding area can be secured. Accordingly, even if the diameter of the welding horn is reduced by reducing the diameter of the winding hole H1 to increase the energy capacity, sufficient welding strength can be secured.

The first cross-sectional size (b) at the end point 212 of the first protrusion 210 can be formed smaller than the second cross-sectional size (a) at the protrusion start point 211. The first cross-section at the end point 212 of the first protrusion 210 and the six side portions 213 function as an area for applying pressure to the member to be welded. The first cross-section at the end point 212 of the first protrusion 210 and the six side portions 213 function as an area for applying pressure to the member to be welded. In order to secure an appropriate pressing area for ultrasonic welding and to form an inclination angle suitable for applying pressure to the workpiece at the side portion 213, a first cross-sectional size (b) at an end point 212 of the first protrusion 210 may be designed to be within a range of 1/10 to 1/2 of a second cross-sectional size (a) at a protrusion start point 211.

In an embodiment of the present disclosure, in order to secure an appropriate pressing area for the workpiece, the second cross-sectional size (a) at the protrusion start point 211 of the first protrusion 210 can be designed within a range of 0.1 mm to 1 mm. In the embodiment of FIG. 6, the knurling section of the welding horn 200 comprises 19 first protrusions 210. When the pressing area (welding area) of one first protrusion 210 is 0.2 to 0.3 mm², the total pressing area becomes 3.8 to 5.7 mm².

In contrast, when the protrusions of the knurling section are designed in a square cross-section shape (comparative example), the pressing area of each protrusion is 0.3 to 0.4 mm², but since the knurling section of the welding horn 200 of the same area includes 9 protrusions, the total pressing area becomes 2.7 to 3.6 mm². Therefore, according to an embodiment of the present disclosure, the total pressing area of the welding horn of the ultrasonic welding device may be increased by about 40% or more compared with that of a welding horn having a square cross-sectional shape.

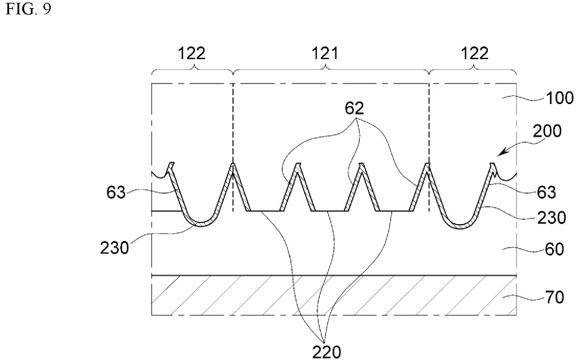

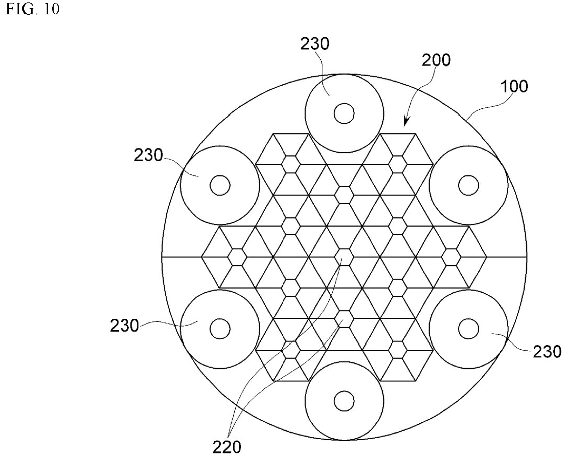

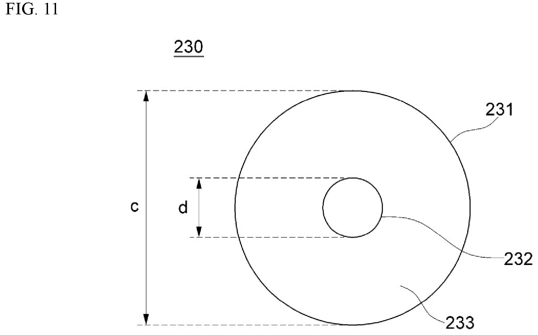

FIG. 9 is a cross-sectional view showing a welding horn of a welding tip constituting an ultrasonic welding device according to another embodiment of the present disclosure. FIG. 10 is a plan view showing a welding horn constituting an ultrasonic welding device according to the embodiment of FIG. 9. FIG. 11 is a side view showing an enlarged view of a second protrusion of a welding horn constituting an ultrasonic welding device according to the embodiment of FIG. 9. In describing the embodiments of FIGS. 9 to 11, redundant descriptions of components identical to or corresponding to the previously described embodiments may be omitted. Hereinafter, a description will be given focusing on components that are different from the previously described embodiment.

Referring to FIGS. 9 to 11, the knurling section of the welding horn 200 constituting the ultrasonic welding device according to an embodiment of the present disclosure may include first protrusions 220 formed in a central region 121 of the knurling section, and second protrusions 230 disposed in an outer region 122 surrounding the central region 121 of the knurling section. The first protrusions 220 of FIGS. 9 to 11 may be provided in a shape identical/similar to the first protrusions 210 of FIGS. 5 to 8.

The second protrusions 230 may be formed in a different shape from the first protrusions 220. The second protrusions 230 can be formed in a truncated conical shape. The outermost protrusions among the first protrusions 220 can be arranged spaced apart from each other. The second protrusions 230 can be arranged between the outer protrusions of the first protrusions 220. The second protrusions 230 can be arranged at positions corresponding to the corner points of the hexagon.

The second protrusions 230 can be formed so that the transverse cross-sectional area decreases in the direction toward the workpiece. The second protrusions 230 may be formed such that a first cross-sectional shape at an end point 232 and a second cross-sectional shape at a protrusion start point 231 are each have a circular shape, based on a direction toward the workpiece. The first cross-sectional shape at the end point 232 of the second protrusions 230 and the second cross-sectional shape at the protrusion start point 231 can be formed to be arranged coaxially.

Since the shape of the first protrusion 220 is the same as or similar to the first protrusion 210 of the embodiment described above, a description thereof will be omitted. The first cross-sectional size (d) at the end point 232 of the second protrusion 230 can be formed smaller than the second cross-sectional size (c) at the protrusion start point 231. Accordingly, the side surface 233 of the second protrusion 230 is formed as an inclined surface. The first cross-section and side surface 233 at the end point 232 of the second protrusion 230 act as an area that presses the workpiece. In order to secure an appropriate pressing area for ultrasonic welding and to form an inclination angle suitable for applying pressure to the workpiece at the side portion 233, a first cross-sectional size (d) at an end point 232 of the second protrusion 230 may be designed to be within a range of 1/10 to 1/2 of a second cross-sectional size (c) at a protrusion start point 231.

According to the embodiments of FIGS. 9 to 11, the pressing area of the welding horn in contact with the base material can be expanded through a combination of protrusions of various knurl patterns, and the welding joint strength of the current collector plate 60 and the rivet 70 can be secured even within a limited horn diameter. Therefore, the energy capacity can be increased by reducing the core of the cylindrical battery cell. In addition, according to the embodiments of FIGS. 9 to 11, a knurl pattern of a complete shape can be applied to the outermost area through an alternating arrangement of a hexagonal cross-section knurl pattern and a circular cross-section knurl pattern, and the occurrence of foreign substances and burrs in the outer area of the weld can be reduced. In addition, the stress concentration due to increased curvature can be prevented by arranging the truncated conical knurl placement in the outer region of the welding horn, and the plastic deformation amount can be reduced by reducing the stress in the outer region of the horn where the displacement is large due to torsional vibration.

An ultrasonic welding method according to an embodiment of the present disclosure may include a step of preparing an ultrasonic welding device as described above, and a step of ultrasonically welding and joining a current collector plate 60 of a cylindrical battery cell to a rivet 70 by means of a welding tip of the ultrasonic welding device having protrusions with a hexagonal cross-sectional shape or a knurl pattern in which protrusions with hexagonal and circular cross-sectional shapes are combined.

As the ultrasonic welding method is performed by the ultrasonic welding device according to an embodiment of the present disclosure, a plurality of indentations 61, 62, 63 can be formed by ultrasonic welding corresponding to the knurling section pattern (protrusions) of the welding tip 100 constituting the ultrasonic welding device at the welded portion 110 of the current collector plate 60 and the rivet 70. A plurality of indentations 61, 62, 63 can be formed by pressing a contact surface in the uneven shape of a welding horn 200 provided at the end of a welding tip 100 of an ultrasonic welding device onto at least one workpiece among a current collector plate 60 and a rivet 70.

The plurality of indentations 61, 62, 63 may be formed in a hexagonal cross-sectional shape corresponding to the plurality of protrusions 210, 220, 230 of the knurling section arranged on the end surface of the welding tip 100 (see FIG. 5), or may be formed to have an arrangement in which a hexagonal cross-sectional shape and a circular cross-sectional shape are combined (see FIG. 9). A plurality of indentations 61, 62, 63 can be formed to protrude from the end surface in a direction toward the workpiece.

Among the plurality of indentations 61, 62, 63, the first indentations 61, 62 formed in the central region 111, 121 of the welded portion 110 may include first indentation grooves formed by being indented into the workpiece. The first indentation grooves may be formed in a truncated hexagonal pyramidal shape, the cross-sectional area of which decreases as the depth increases from the surface of the workpiece. Among the plurality of indentations 61, 62, 63, the second indentation grooves of the second indentations 63 arranged in the outer region 112, 122 surrounding the central region 111, 121 of the welded portion 110 may be formed in a truncated cone shape whose cross-sectional area decreases as the depth increases from the surface of the workpiece.

A plurality of indentations 61, 62, 63 formed on at least one workpiece among the current collector plate 60 and the rivet 70 appear as an engraved shape corresponding to the knurling section pattern (shape of protrusions) of the welding horn of the ultrasonic welding device, and the welding joint strength can be increased by increasing the pressing area by the knurling section of the welding horn of the ultrasonic welding device. In addition, according to an embodiment having indentations 63 corresponding to protrusions of hexagonal and circular cross sections, the welding joint strength can be secured, and plastic deformation amount can be prevented from increasing due to excessive stress concentration at the outermost part of the welded portion of the current collector plate 60 and the rivet 70, and the effect of reducing foreign matter or burrs can also be provided.

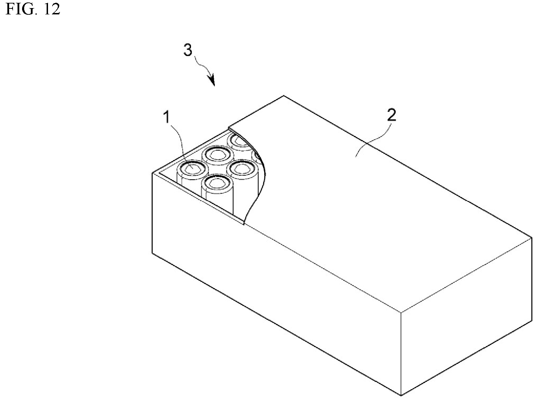

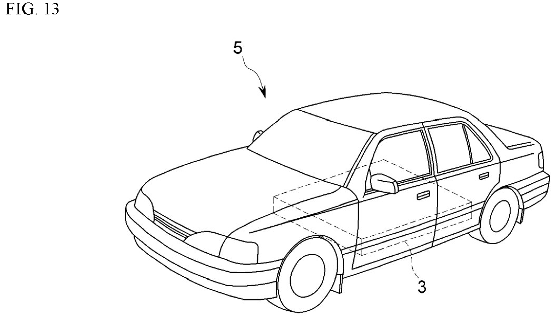

FIG. 12 is a view illustrating a battery pack including the battery cell according to an embodiment of the present disclosure. Referring to FIG. 12, a battery pack 3 according to an embodiment of the present disclosure includes a battery assembly in which a plurality of battery cells 1 according to one embodiment of the present disclosure as described above are electrically connected, and a pack housing 2 accommodating the same. FIG. 13 is a diagram for explaining a vehicle comprising at least one battery pack of FIG. 12. Referring to FIG. 13, a vehicle 5 according to an embodiment of the present disclosure may be, for example, an electric vehicle, a hybrid vehicle, or a plug-in hybrid vehicle, and may include the battery pack 3 according to one embodiment of the present disclosure. The vehicle 5 may include a four-wheeled vehicle and a two-wheeled vehicle. The vehicle 5 operates by receiving power from a battery pack 3 according to one embodiment of the present disclosure.

While the present disclosure has been described with reference to the limited embodiments and drawings, the present disclosure is not limited thereto, and it will be understood by those of ordinary skill in the art that various modifications and variations may be made within the technical spirit of the present disclosure and the equivalent scope of the claims set forth below.

## Claims

1. An ultrasonic welding device, comprising: a welding tip for joining a current collector plate of a cylindrical battery cell to a rivet by ultrasonic welding;
wherein the welding tip comprises:
a welding horn at an end of the welding tip to press at least one workpiece, selected from the current collector plate and the rivet, with an uneven contact surface;
wherein the welding horn comprises:
a knurling section comprising a plurality of protrusions arranged on an end surface of the welding tip to press the workpiece with the uneven contact surface;
wherein the plurality of protrusions of the knurling section are formed to protrude from the end surface in a direction toward the workpiece,
wherein first protrusions, which are arranged in a central region of the knurling section among the plurality of protrusions, are formed in a hexagonal cross-sectional shape, and
wherein the first protrusions have a transverse cross-sectional area that decreases in the direction toward the workpiece.

2. The ultrasonic welding device of claim 1, wherein
the first protrusions
are formed such that a first cross-sectional shape at an end point and a second cross-sectional shape at a protrusion start point, based on the direction toward the workpiece, are each a hexagonal cross-sectional shape, and
the first cross-sectional shape and the second cross-sectional shape are arranged coaxially.

3. The ultrasonic welding device of claim 1, wherein
the first protrusions are arranged in a honeycomb structure.

4. The ultrasonic welding device of claim 1, wherein
the plurality of protrusions further comprise second protrusions arranged in an outer region surrounding the central region of the knurling section, and
the second protrusions are formed in a different shape from the first protrusions.

5. The ultrasonic welding device of claim 4, wherein
the second protrusions are formed in a truncated conical shape.

6. The ultrasonic welding device of claim 5, wherein
outermost protrusions arranged at an outermost portion of the first protrusions are spaced apart from each other, and
the second protrusions are arranged between the outermost protrusions.

7. The ultrasonic welding device of claim 6, wherein
the second protrusions are arranged at positions corresponding to corner points of the hexagonal protrusions.

8. An ultrasonic welding method, comprising: preparing an ultrasonic welding device comprising a welding tip, wherein the welding tip includes a welding horn at an end of the welding tip to press at least one workpiece, selected from a current collector plate and a rivet of a cylindrical battery cell, with an uneven contact surface; and
joining, by the ultrasonic welding device, the current collector plate of the cylindrical battery cell to the rivet by ultrasonic welding,
wherein the joining by ultrasonic welding comprises:
pressing the welding horn, which comprises a knurling section, against the workpiece with the uneven contact surface, wherein the knurling section comprises a plurality of protrusions arranged on an end surface of the welding tip, and the plurality of protrusions are formed to protrude from the end surface in a direction toward the workpiece, and
wherein, in the joining by ultrasonic welding, first protrusions, which are arranged in a central region of the knurling section among the plurality of protrusions joined to the workpiece, are formed in a hexagonal cross-sectional shape and are pressed against the workpiece, and the first protrusions have a transverse cross-sectional area that decreases in the direction toward the workpiece.

9. The ultrasonic welding method of claim 8, wherein,
in the joining by ultrasonic welding, the first protrusions are arranged in a honeycomb structure and are pressed against the workpiece.

10. The cylindrical battery cell of claim 8, wherein
in the joining by ultrasonic welding, second protrusions, which are arranged in an outer region surrounding the central region of the knurling section among the plurality of protrusions, are formed in a truncated conical shape and are pressed against an outer region of a welded portion of the workpiece.

11. The ultrasonic welding method of claim 10, wherein,
wherein, in the joining by ultrasonic welding,
outermost protrusions arranged at an outermost portion of the first protrusions are spaced apart from each other and are pressed against an edge region of the central region of the welded portion of the workpiece; and
the second protrusions, which are arranged at positions corresponding to corner points of the hexagonal protrusions, are arranged between the outermost protrusions and are pressed against the outer region of the welded portion of the workpiece.

12. A cylindrical battery cell, comprising: a cylindrical battery housing;
a cylindrical electrode assembly accommodated in the battery housing and formed by winding a first electrode, a second electrode, and a separator around a winding axis;
a current collector plate provided in the battery housing and electrically connected to at least one of the first electrode and the second electrode of the electrode assembly; and
a rivet, at least a portion of which is inserted through an opening of the battery housing and joined to the current collector plate,
wherein the current collector plate and the rivet are joined by ultrasonic welding, and a plurality of indentations are formed by the ultrasonic welding at a welded portion of the current collector plate and the rivet,
wherein the plurality of indentations
are formed by pressing an uneven contact surface of a welding horn, provided at an end of a welding tip of an ultrasonic welding device, against at least one workpiece selected from the current collector plate and the rivet,
wherein the plurality of indentations are formed in a hexagonal cross-sectional shape corresponding to a plurality of protrusions of a knurling section arranged on an end surface of the welding tip,
wherein the plurality of indentations are formed to protrude from the end surface in a direction toward the workpiece,
wherein first indentations, which are formed in a central region of the welded portion among the plurality of indentations, comprise first indentation grooves formed by being indented into the workpiece, and
wherein the first indentation grooves have a truncated hexagonal pyramid shape whose cross-sectional area decreases as a depth increases from a surface
of the workpiece.

13. The cylindrical battery cell of claim 12, wherein
the plurality of indentations comprise
second indentation grooves arranged in an outer region surrounding the central region of the welded portion, and
the second indentation grooves are formed in a truncated conical shape whose cross-sectional area decreases as the depth increases from the surface
of the workpiece.

14. A battery pack, comprising at least one cylindrical battery cell of claim 12.

15. A vehicle, comprising at least one battery pack of claim 14.
